# EUROPÄISCHE PATENTSCHRIFT

(11) **EP 3 967 988 B1**
(45) Veröffentlichungstag und Bekanntmachung des Hinweises auf die Patenterteilung: **30.10.2024**
(21) Anmeldenummer: 21196069.5
(22) Anmeldetag: 10.09.2021
(51) Int. Cl.: G01F 1/58, G01F 1/60, G01F 25/10

(54) **VERFAHREN ZUM BETREIBEN EINES MAGNETISCH-INDUKTIVEN DURCHFLUSSMESSGERÄTS UND ENTSPRECHENDES MAGNETISCH-INDUKTIVES DURCHFLUSSMESSGERÄT**
MAGNETIC-INDUCTIVE FLOW METER AND METHOD FOR OPERATING A MAGNETIC-INDUCTIVE FLOW METER
PROCÉDÉ DE FONCTIONNEMENT D'UN DÉBITMÈTRE MAGNÉTIQUE-INDUCTIF ET DÉBITMÈTRE MAGNÉTIQUE-INDUCTIF CORRESPONDANT

(30) Priorität: 15.09.2020 DE 102020123945
(43) Veröffentlichungstag der Anmeldung: 16.03.2022
(73) Patentinhaber: Krohne Messtechnik GmbH, 47058 Duisburg (DE)
(72) Erfinder: Förster, Jan, 45149 Essen (DE)
(74) Vertreter: Gesthuysen Patentanwälte

(56) Entgegenhaltungen:
- US-A1- 2004 027 132
- US-A1- 2006 235 634
- US-A1- 2008 250 867

## Beschreibung

Die Erfindung betrifft ein Verfahren zum Betreiben eines magnetisch-induktiven Durchflussmessgeräts mit einem Messrohr zum Führen eines Mediums, mit einer Magnetfelderzeugungsvorrichtung zum Erzeugen eines das Messrohr senkrecht zur Strömungsrichtung des Mediums durchsetzenden Magnetfeldes, mit einem Elektrodenpaar zum Abgreifen einer in dem Medium im Messrohr induzierten elektrischen Spannung als verrauschtes Rohmesssignal, wobei das verrauschte Rohmesssignal an eine Signalverarbeitungsvorrichtung weitergeleitet wird und von der Signalverarbeitungsvorrichtung eine Mehrzahl an aufgenommenen verrauschten Rohmesssignalen zumindest zu einem entrauschten Durchflussmesswert verarbeitet werden. Darüber hinaus betrifft die Erfindung auch ein solches magnetisch-induktives Durchflussmessgerät.

Die zuvor genannten Durchflussmessgeräte, die auf dem magnetisch-induktiven Messprinzip beruhen, sind seit Jahrzehnten bekannt. Demzufolge sind auch Verfahren zum Betreiben solcher Durchflussmessgeräte, wie sie zuvor beschrieben worden sind, seit Langem bekannt. Das magnetisch-induktive Messprinzip beruht auf dem Umstand der Kraftwirkung auf Ladungsträger, die sich senkrecht zu einem Magnetfeld bewegen bzw. die eine Bewegungskomponente senkrecht zu dem betreffenden Magnetfeld haben. Um eine Durchflussmessmessung auf diesem Prinzip durchführen zu können, muss das in dem Messrohr geführte Medium eine gewisse elektrische Leitfähigkeit haben. Je schneller sich das Medium durch das Messrohr und damit auch durch das von der Magnetfelderzeugungsvorrichtung erzeugte Magnetfeld bewegt, desto stärker erfolgt eine Trennung von Ladungsträgern in dem strömendem Medium des entsprechenden Messrohrabschnitts, und umso stärker wird ein durch die Ladungstrennung bewirktes elektrisches Feld, das sich zwischen den Elektroden des Messrohrs ausbildet und als elektrische Spannung zwischen den Elektroden abgenommen werden kann. Die Messspannung zwischen den Elektroden entwickelt sich proportional zur Strömungsgeschwindigkeit, jedenfalls in dem Zeitraum, in dem das Magnetfeld konstant ist und die Leitfähigkeit des Mediums bzw. die Ladungsträgerkonzentration in dem Medium gleichbleibend ist.

Auch wenn die grundlegenden Zusammenhänge des magnetisch-induktiven Messprinzips vollkommen klar sind, gibt es in der messtechnischen Praxis doch einige Hürden, die zu nehmen sind, bis ein Durchflussmessgerät vorliegt, das zuverlässig genaue Durchflussinformationen liefert. Eine dieser Hürden ist, dass die in dem Medium induzierte elektrische Spannung als ein deutlich verrauschtes Rohmesssignal an den Elektroden des Elektrodenpaares anliegt. Das Signal-zu-Rausch-Verhältnis dieses verrauschten Rohmesssignals ist sehr ungünstig, sodass sich eine zuverlässige, stabile Durchflussinformation aus den verrauschten Rohmessdaten nicht direkt entnehmen lässt. Dieses Rauschen ist im Wesentlichen begründet durch elektrochemische Vorgänge an den Elektroden. Die Patentanmeldung US 2008/0250867 A1 ist ein Beispiel für ein Dokument aus dem Stand der Technik, das magnetisch-induktive Durchflussmesser offenbart, die zur Bestimmung von Frequenzspektren verrauschter Messsignale konfiguriert sind.

Zur Reduzierung des durch elektrochemische Vorgänge verursachten Rauschens ist es aus dem Stand der Technik beispielsweise bekannt, die Richtung des Magnetfeldes beständig zu wechseln, sodass auch die in dem Medium induzierte Spannung ihre Richtung wechselt. Dazu wird regelmäßig die Bestromungsrichtung der Spulen in der Magnetfelderzeugungsvorrichtung geändert. Da die Magnetfeldrichtung aufgrund der vorhandenen Induktivitäten nicht instantan gewechselt werden kann, sondern stets ein Übergangsbereich vorliegt, in dem das Magnetfeld nicht konstant ist, muss dann darauf geachtet werden, dass nur solche Rohmesssignale für die Ermittlung des Durchflusses verwendet werden, die bei einem konstanten Magnetfeld erfasst worden sind. Durch das beschriebene Umschalten des Magnetfeldes lassen sich bestimmte elektrochemische Effekte reduzieren, gleichwohl ist das Rohmesssignal an den Elektroden weiterhin sehr deutlich verrauscht. Um das verrauschte Rohmesssignal zu einem tauglichen, entrauschten Durchflussmesswert zu entwickeln, wird das aufgenommene verrauschte Rohmesssignal in einer Signalverarbeitungsvorrichtung entrauscht, beispielsweise durch Mittelwertbildung über eine Vielzahl von aufgenommenen verrauschten Rohmesssignalen. Dieser so gewonnene entrauschte Durchflussmesswert wird dann üblicherweise angezeigt und/oder über eine Nutzsignalschnittstelle ausgegeben, oft über eine 4-20 mA-Schnittstelle (häufig auch mit überlagertem digitalen HART-Protokoll).

Für den Verwender eines Messgerätes ist nicht nur von Interesse, wie genau der von einem Messgerät im fehlerfreien Fall gelieferte Messwert ist. Je nach Einsatzgebiet des Messgerätes kann es von erheblicher Bedeutung sein, das Vorliegen eines Fehlerfalls im Messgerät zu erkennen, insbesondere eines solchen Fehlers, der sich auf den Messwert auswirkt. Solche Fehler sind manchmal tückisch, da sie sich nicht spontan und klar erkennbar einstellen, sondern vielmehr im Rahmen eines schleichenden Prozesses auftreten und dann besonders schlecht erkennbar sind.

Aufgabe der vorliegenden Erfindung ist es daher, ein Verfahren zum Betreiben eines magnetisch-induktiven Durchflussmessgeräts anzugeben und ein magnetisch-induktives Durchflussmessgerät, das mit einem solchen Verfahren betrieben wird, mit denen die Vertrauenswürdigkeit eines ermittelten Messwertes bestimmt werden kann und die es so ermöglichen, den Verwender des Messgeräts vor unzuverlässigen Messwerten zu warnen.

Die zuvor hergeleitete und beschriebene Aufgabe wird bei dem eingangs dargestellten Verfahren zum Betreiben eines magnetisch-induktiven Durchflussmessgeräts und bei dem dargestellten magnetisch-induktiven Durchflussmessgerät zunächst und im Wesentlichen dadurch gelöst, dass in einem Kalibrierschritt eine Mehrzahl an entrauschten Vergleich-Durchflussmesswerten bestimmt wird, und dass aus zumindest einem Teil der mehreren aufgenommenen verrauschten Rohmesssignale, auf denen die Berechnung der entrauschten Vergleich-Durchflussmesswerte basiert, zu den Vergleich-Durchflussmesswerten jeweils ein Vergleich-Frequenzspektrum bestimmt wird. Dieser Vorgang kann im Werk des Herstellers absolviert werden, was den Vorteil hat, dass sich Volumendurchflüsse als Vergleich-Durchflüsse präzise vorgeben lassen. Die Durchführung des Vorgangs kann aber auch im Einbauzustand im Prozess durchgeführt werden. Dies hat den Vorteil, dass auch Einflüsse berücksichtigt werden, die mit der individuellen Einbausituation zusammenhängen. Dieser Kalibrierschritt muss im Normalbetrieb des magnetisch-induktiven Durchflussmessgeräts nicht ständig wiederholt werden, vielmehr ist auch eine einmalige Durchführung ausreichend. Es kann auch sinnvoll sein, den Kalibriervorgang zum Beispiel nach einer Revision des magnetisch-induktiven Durchflussmessgeräts erneut durchzuführen. Es sollte jedenfalls sichergestellt sein, dass der Schritt durchgeführt wird, wenn sich das magnetisch-induktive Durchflussmessgerät in einem fehlerfreien Zustand befindet.

Ferner gehört zum erfindungsgemäßen Verfahren, dass im Messbetrieb aus mehreren aufgenommenen verrauschten Rohmesssignalen ein aktueller entrauschter Durchflussmesswert berechnet wird; hierbei handelt es sich um das ganz "normale" Ermitteln eines aktuellen Messwertes. Aus zumindest einem Teil der mehreren aufgenommenen verrauschten Rohmesssignale, auf denen die Berechnung des aktuellen entrauschten Durchflussmesswerts basiert, wird zusätzlich ein aktuelles Mess-Frequenzspektrum bestimmt.

Schließlich wird in einem Vergleichschritt das aktuelle Mess-Frequenzspektrum mit einem der Vergleich-Frequenzspektren verglichen und es wird ein Abweichungswert bestimmt. In Abhängigkeit von dem Abweichungswert wird der aktuelle entrauschte Durchflussmesswert als unzuverlässig und/oder als zuverlässig signalisiert. Es kann also sein, dass entweder nur unzuverlässige aktuelle entrauschte Durchflussmesswerte als unzuverlässig signalisiert werden (keine Signalisierung bei der Qualifikation als "zuverlässig"), oder es kann sein, dass nur zuverlässige aktuelle entrauschte Durchflussmesswerte als zuverlässig signalisiert werden (keine Signalisierung bei der Qualifikation als "unzuverlässig"), oder es kann sein, dass eine entsprechende qualifizierende Signalisierung in beiden Fällen erfolgt; ein konkreter aktueller entrauschter Durchflussmesswert kann natürlich nicht gleichzeitig als "zuverlässig" und als "unzuverlässig" signalisiert werden.

Erfindungsgemäß ist vorgesehen, dass bei Abweichung des Abweichungswertes von einem Erwartungswert der aktuelle entrauschte Durchflussmesswert als unzuverlässig signalisiert wird.

Der vorliegenden Erfindung liegt die Erkenntnis zugrunde, dass in den verrauschten Rohmesssignalen nicht nur Informationen hinsichtlich der induzierten elektrischen Spannung enthalten sind, also Durchflussinformationen, sondern vielmehr auch Informationen, die bislang noch gar nicht genutzt werden, aber gleichwohl einen hohen Mehrwert für den Anwender darstellen können. Es ist erkannt worden, dass sich das Frequenzspektrum der verrauschten Rohmesssignale, die über Mittelwertbildung einem entrauschten Durchflussmesswert zugrunde liegen, systematisch mit dem Durchfluss ändert. Demzufolge ist das aus verrauschten Rohmesssignalen gewonnene Frequenzspektrum charakteristisch für den ermittelten entrauschten Durchflussmesswert. Wenn im fehlerfreien Zustand, also bei dem hier genannten Kalibrierschritt, für eine Reihe von Vergleich-Durchflussmesswerten die zugehörigen Vergleich-Frequenzspektren ermittelt werden, ist es also möglich, einen aktuellen entrauschten Durchflussmesswert auf seine Vertrauenswürdigkeit hin zu überprüfen, indem aus den, dem aktuellen entrauschten Durchflussmesswert zugrunde liegenden verrauschten Rohmesssignalen das zugehörige aktuelle Mess-Frequenzspektrum ermittelt wird und mit einem Vergleich-Frequenzspektrum verglichen wird, das zu einem Vergleich-Durchflussmesswert gehört, der möglichst ähnlich dem aktuellen entrauschten Mess-Durchflussmesswert ist.

Eine Weiterentwicklung des Verfahrens sieht vor, dass als Frequenzspektrum das Amplitudenspektrum verwendet wird, also das Amplitudenspektrum des Vergleich-Frequenzspektrums und das Amplitudenspektrum des aktuellen Mess-Frequenzspektrums, wobei insbesondere die Frequenzspektren durch Fast-Fourier-Analyse (FFT) der aufgenommenen verrauschten Rohmesssignale gewonnen werden. Die aufgenommenen verrauschten Rohmesssignale liegen hier also in digitalisierter Form und in einem Abtastzeitraster vor. Allgemeines Ergebnis einer Frequenzanalyse ist üblicherweise ein komplexwertiges Frequenzspektrum, das nach Betrag und Phase in ein frequenzabhängiges Amplitudenspektrum und ein frequenzabhängiges Phasenspektrum aufgeteilt werden kann. Es hat sich herausgestellt, dass hinreichend gute Vergleichsergebnisse bei dem Vergleich des aktuellen Mess-Frequenzspektrums mit einem der Vergleich-Frequenzspektren auch dann gelingen, wenn nur die entsprechenden Amplitudenspektren herangezogen werden.

Gemäß einer bevorzugten Ausgestaltung des Verfahrens ist vorgesehen, dass im Vergleichschritt als Abweichungswert die Fläche zwischen dem aktuellen Mess-Frequenzspektrum und dem herangezogenen Vergleich-Frequenzspektrum berechnet wird. Da die prägnantesten Veränderungen der Frequenzspektren bei niedrigen Frequenzen vorliegen, ist insbesondere vorgesehen, die Fläche zwischen den Frequenzspektren - insbesondere zwischen den Amplitudenspektren - in einem Frequenzbereich bis maximal 1 kHz, vorzugsweise in einem Frequenzbereich bis maximal 500 Hz, ganz bevorzugt in einem Frequenzbereich bis maximal 300 Hz zu berechnen.

Eine Weiterentwicklung des Verfahrens ist dadurch gekennzeichnet, dass wenigstens ein Frequenzspektrum geglättet wird, insbesondere durch Anwendung eines gleitenden Mittelwertes, bevorzugt durch Anwendung eines gleichgewichteten gleitenden Mittelwertes oder insbesondere durch Anwendung eines Glättungsfilters nach Savitzky und Golay (Savitzky-Golay-Filter), insbesondere mit einer Polynomordnung von 2 oder 3, und insbesondere mit einer Bereichsbreite zwischen 10 und 16, besonders bevorzugt mit einer Bereichsbreite zwischen 11 und 15. Die aus den aufgenommenen verrauschten Rohmesssignalen gewonnenen Frequenzspektren sind ebenfalls verhältnismäßig verrauscht, also mit verhältnismäßig großen Unterschieden zwischen benachbarten Amplitudenwerten (und gegebenenfalls Phasenwerten, soweit zur Auswertung herangezogen) versehen. Um eine Auswertung von zu vergleichenden Frequenzspektren zu erleichtern und auch weniger schwankungsanfällig zu machen, hat sich die vorgeschlagene Glättung der Frequenzspektren als vorteilhaft erwiesen. Um die Berechnung der geglätteten Frequenzspektren nicht zu aufwendig werden zu lassen, haben sich die angegebenen Wertebereiche für die Bereichsbreite und die Polynomordnung als vorteilhaft herausgestellt.

Der Vergleichschritt kann in der konkreten Ausführung auf unterschiedliche Weise ausgeführt werden. Gemäß einer ersten Variante ist vorgesehen, dass die im Kalibrierschritt berechneten entrauschten Vergleich-Durchflussmesswerte und die zugehörigen Vergleich-Frequenzspektren zumindest teilweise abgespeichert werden. Im Vergleichschritt wird das Mess-Frequenzspektrum mit demjenigen Vergleich-Frequenzspektrum verglichen und ein entsprechender Abweichungswert bestimmt, welches Vergleich-Frequenzspektrum zu dem entrauschten Vergleich-Durchflussmesswert gehört, der den geringsten Unterschied zum aktuellen entrauschten Durchflussmesswert aufweist. Bei dieser Variante müssen also verhältnismäßig viele Vergleich-Durchflussmesswerte und vor allem zugehörigen Vergleich-Frequenzspektren aufgenommen und abgespeichert werden, um eine gute Trennschärfe für die Unterscheidung zwischen einem zuverlässigen bzw. vertrauenswürdigen und einem unzuverlässigen bzw. nicht vertrauenswürdigen aktuellen entrauschten Durchflussmesswert zu gewährleisten. Da hier stets solche Vergleich-Frequenzspektren herangezogen werden, die dem aktuellen Mess-Frequenzspektrum im fehlerfreien Fall sehr ähnlich sein müssen, ist insbesondere vorgesehen, den Erwartungswert für den Abweichungswert in einem Wertebereich um Null zu definieren.

Gemäß einer zweiten Variante ist vorgesehen, dass im Kalibrierschritt eines der mehreren Vergleich-Frequenzspektren als Referenz-Frequenzspektrum - also als Bezug-Frequenzspektrum für alle Vergleiche - gewählt und abgespeichert wird. Für die anderen Vergleich-Frequenzspektren wird jeweils ein Referenz-Abweichungswert zu dem Referenz-Frequenzspektrum wie im Vergleichschritt bestimmt. Diese Referenz-Abweichungswerte müssen für den späteren vergleich gespeichert werden, jedoch müssen nicht die vom Referenz-Frequenzspektrum verschiedenen Vergleich-Frequenzspektren gespeichert werden. Im Vergleichschritt wird dann das aktuelle Mess-Frequenzspektrum mit dem Referenz-Frequenzspektrum verglichen und der Abweichungswert bestimmt. Als Erwartungswert wird ein geeigneter Referenz-Abweichungswert oder ein von den Referenz-Abweichungswerten abgeleiteter Wert herangezogen. Bei dieser Verfahrensvariante müssen zunächst zwar auch eine Reihe von Vergleich-Frequenzspektren mit zugehörigen Vergleich-Durchflussmesswerten aufgenommen werden, jedoch nur für den Kalibrierschritt.

Des Weiteren ist bevorzugt bei der vorgenannten Verfahrensvariante für den Vergleichschritt vorgesehen, dass aus der Mehrzahl an Referenz-Abweichungswerten derjenige als geeigneter Referenz-Abweichungswert herangezogen wird, dessen zugehöriger Vergleich-Durchflussmesswert am nächsten gelegen ist zu dem aktuellen Mess-Durchflussmesswert, der auf seine Vertrauenswürdigkeit hin zu überprüfen ist.

Mit einer besonders bevorzugten Weiterentwicklung des Verfahrens ist es möglich, mit sehr geringem Aufwand eine deutlich größere Auflösung im Vergleichschritt zu erzielen, also eine präzisere Trennlinie herzustellen bei der Unterscheidung zwischen zuverlässigen und unzuverlässigen aktuellen Mess-Durchflussmesswerten. Dies ist dadurch möglich, dass aus den resultierenden Wertepaaren aus dem Abweichungswert eines Vergleich-Frequenzspektrums mit dem Referenz-Frequenzspektrum und dem zu dem Vergleich-Frequenzspektrum gehörenden Vergleich-Durchflussmesswert ein funktionaler Zusammenhang zwischen dem Abweichungswert und dem Vergleich-Durchflussmesswert abgeleitet wird. Dieser funktionale Zusammenhang ermöglicht es, zu jedem aktuellen Mess-Durchflussmesswert einen - wenn auch geschätzten - zugehörigen Referenz-Abweichungswert zu bestimmen. Der Vergleich ist also nicht mehr nur durchführbar mit der Anzahl an im Kalibrierschritt bestimmten Referenz-Abweichungswerten, sondern praktisch mit einer beliebig großen Anzahl an - approximierten - Referenz-Abweichungswerten.

Eine Weiterentwicklung des vorgenannten Verfahrens zeichnet sich dadurch aus, dass der funktionale Zusammenhang auf einer Approximationsfunktion auf Grundlage der resultierenden Wertepaare aus dem Abweichungswert eines Vergleich-Frequenzspektrums mit dem Referenz-Frequenzspektrum und dem zu dem Vergleich-Frequenzspektrums gehörenden Vergleich-Durchflussmesswert beruht, insbesondere auf einer Interpolationsfunktion oder auf einer Ausgleichsfunktion, insbesondere auf einer linearen oder quadratischen Interpolationsfunktion oder Ausgleichsfunktion.

Das Verfahren muss nicht vollständig auf dem jeweiligen magnetisch-induktiven Durchflussmessgerät, um dessen Betrieb es geht, durchgeführt werden. Insbesondere können die erfassten verrauschten Rohmesssignale über eine Schnittstelle des magnetisch-induktiven Durchflussmessgeräts an eine externe Recheneinheit geschickt und dort alle weiteren Berechnungen angestellt werden. Insbesondere kann auch der aktuelle entrauschte Durchflussmesswert und die zugehörigen erfassten Rohmesssignale über eine Schnittstelle verschickt werden und die Berechnung des aktuellen Mess-Frequenzspektrums mit einer externen Recheneinheit durchgeführt werden. Auch können alle Verfahrensschritte des Kalibrierschritts und des Vergleichschritts extern des magnetisch-induktiven Durchflussmessgeräts durchgeführt werden. Entscheidend ist, dass schlussendlich eine Information über die Zuverlässigkeit bzw. Unzuverlässigkeit des aktuellen entrauschten Durchflussmesswertes vorliegt.

Die hergeleitete Aufgabe wird auch gelöst bei dem eingangs genannten magnetisch-induktiven Durchflussmessgerät, und zwar dadurch, dass in einem Speicher wenigstens ein Vergleich-Frequenzspektrum abgelegt ist, das aus mehreren aufgenommenen verrauschten Rohmesssignalen berechnet worden ist bei einem Vergleich-Durchflussmesswert. Der Kalibriervorgang kann, muss aber nicht vollständig durch das magnetisch-induktive Durchflussmessgerät durchgeführt werden. Die Erfassung der verrauschten Rohmesssignale muss natürlich im magnetisch-induktiven Durchflussmessgerät erfolgen, es müssen aber nicht die Vergleich-Frequenzspektren dort berechnet werden. Im Messbetrieb wird aus mehreren aufgenommenen verrauschten Rohmesssignalen ein aktueller entrauschter Durchflussmesswert berechnet, und aus zumindest einem Teil der mehreren aufgenommenen verrauschten Rohmesssignale, auf denen die Berechnung des aktuellen entrauschten Durchflussmesswerts basiert, wird ein aktuelles Mess-Frequenzspektrum bestimmt. In einem Vergleichschritt wird das aktuelle Mess-Frequenzspektrum mit einem der Vergleich-Frequenzspektren verglichen und ein Abweichungswert (D) wird bestimmt. Bei Abweichung des Abweichungswertes von einem Erwartungswert wird der aktuelle entrauschte Durchflussmesswert als unzuverlässig signalisiert.

Vorzugsweise wird zur Signalisierung der Unzuverlässigkeit des aktuellen entrauschten Durchflussmesswertes ein entsprechendes Flag in dem Speicher gesetzt, oder auf einer Anzeige des magnetisch-induktives Durchflussmessgeräts wird ein entsprechendes Signal angezeigt, oder über eine Kommunikationsschnittstelle des magnetisch-induktiven Durchflussmessgeräts wird eine entsprechende Nachricht verschickt, beispielsweise an ein Prozessleitsystem oder an ein angeschlossenes Bediengerät.

Bei einer bevorzugten Ausgestaltung des magnetisch-induktiven Durchflussmessgeräts ist vorgesehen, dass die Signalverarbeitungsvorrichtung und/oder eine andere Recheneinheit so ausgestaltet ist bzw. sind, dass das magnetisch-induktive Durchflussmessgerät im Betrieb die zuvor ausführlich geschilderten Verfahrensschritte durchführt.

Jedes zuvor beschriebene Merkmal, das möglicherweise nur im Zusammenhang mit dem Verfahren zum Betreiben eines magnetisch-induktiven Durchflussmessgeräts beschrieben worden ist, kann selbstverständlich gleicherma-βen gegenständlich auch für ein magnetisch-induktives Durchflussmessgerät gelten, das zur Ausführung des beschriebenen Verfahrens ausgestaltet ist. Umgekehrt sind Merkmale, die zuvor möglicherweise nur im Kontext eines magnetisch-induktiven Durchflussmessgeräts beschrieben worden sind, gleichermaßen auch als Merkmale des hier beschriebenen Verfahrens zum Betreiben des magnetisch-induktiven Durchflussmessgeräts zu verstehen, und zwar für sich genommen oder auch in Kombination mit anderen Merkmalen.

Im Einzelnen gibt es eine Vielzahl von Möglichkeiten, das erfindungsgemä-βe Verfahren zum Betreiben des magnetisch-induktiven Durchflussmessgeräts und das entsprechende erfindungsgemäße magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen:
- Fig. 1: schematisch ein erfindungsgemäßes magnetisch induktives Durchflussmessgerät und ein entsprechendes Verfahren zum Be-treiben des magnetisch induktiven Durchflussmessgerätes,
- Fig. 2: berechnete Vergleich-Frequenzspektren (Amplitudenspektren) aus aufgenommenen verrauschten Rohmesssignalen,
- Fig. 3: ein Detail aus Fig. 2 bei niedrigen Frequenzen,
- Fig. 4: schematisch das beschriebene Verfahren zum Betreiben eines magnetisch-induktiven Durchflussmessgeräts als Ablaufdia-gramm,
- Fig. 5a, 5b: jeweils ein Referenz-Frequenzspektrum mit einem Vergleich-Frequenzspektrum,
- Fig. 6: Referenz-Abweichungswerte in Abhängigkeit vom Durchfluss,
- Fig. 7: einen funktionalen Zusammenhang zwischen dem Referenz-Ab-weichungswert und dem Vergleich-Durchflussmesswert mit To-leranzband für den Erwartungswert bei einem Messrohr mit run-der Durchmesserreduzierung und
- Fig. 8: einen funktionalen Zusammenhang zwischen dem Referenz-Ab-weichungswert und dem Vergleich-Durchflussmesswert mit To-leranzband für den Erwartungswert bei einem Messrohr mit eckiger Durchmesserreduzierung .

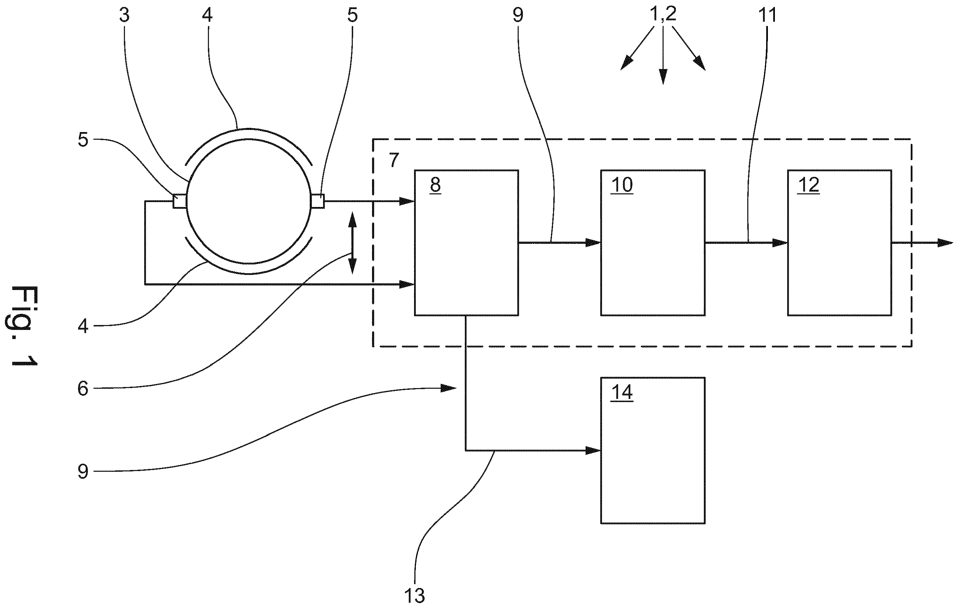

In den Fig. 1 bis 8 ist jeweils dargestellt mit unterschiedlichen Schwerpunkten ein Verfahren 1 zum Betreiben eines magnetisch-induktiven Durchflussmessgeräts 2, wobei das magnetisch-induktive Durchflussmessgerät 2 strukturell in Fig. 1 dargestellt ist.

Das magnetisch-induktive Durchflussmessgerät 2 weist ein Messrohr 3 zum Führen eines Mediums auf, eine Magnetfelderzeugungsvorrichtung 4 zum Erzeugen eines das Messrohr 3 senkrecht zur Strömungsrichtung des Mediums durchsetzenden Magnetfeldes und ein Elektrodenpaar 5 zum Abgreifen einer in dem Medium im Messrohr induzierten elektrischen Spannung als verrauschtes Rohmesssignal 6. Diese Anordnung wird häufig auch als "Sensor" des magnetisch-induktiven Durchflussmessgeräts 2 bezeichnet.

Das verrauschte Rohmesssignal 6 wird mit einem Signalpfad 7 (siehe Fig. 1) von einer Signalaufnahmevorrichtung 8 hochohmig von dem Elektrodenpaar 5 aufgenommen und als aufgenommenes verrauschtes Rohmesssignal 9 von der Signalaufnahmevorrichtung 8 an eine Signalverarbeitungsvorrichtung 10 weitergeleitet. Von der Signalverarbeitungsvorrichtung 10 wird das aufgenommene verrauschte Rohmesssignal 9 zumindest zu einem entrauschten Durchflussmesswert 11 verarbeitet und der entrauschte Durchflussmesswert 11 wird in dem dargestellten Ausführungsbeispiel dann über eine Nutzsignalschnittstelle 12 ausgegeben. Die Nutzsignalschnittstelle 12 ist in den dargestellten Ausführungsbeispielen eine Zweileiter-Stromschnittstelle mit überlagertem HART-Protokoll, wie sie in der Prozessindustrie vielfach verwendet wird. Auf die Umstände der Ausgabe des entrauschten Durchflussmesswertes 11 kommt es vorliegend jedoch nicht an.

Der erste Signalpfad 7 ist in Fig. 1 von einem gestrichelten Kasten umgeben. Diese Bestandteile des magnetisch-induktiven Durchflussmessgeräts 2 bilden üblicherweise den sogenannten Transmitter. In der Signalverarbeitungsvorrichtung 10 werden zur Entrauschung des aufgenommenen verrauschten Rohmesssignals 9 eine Vielzahl von Einzelwerten gemittelt und zu einem brauchbaren entrauschten Durchflussmesswert 11 verarbeitet.

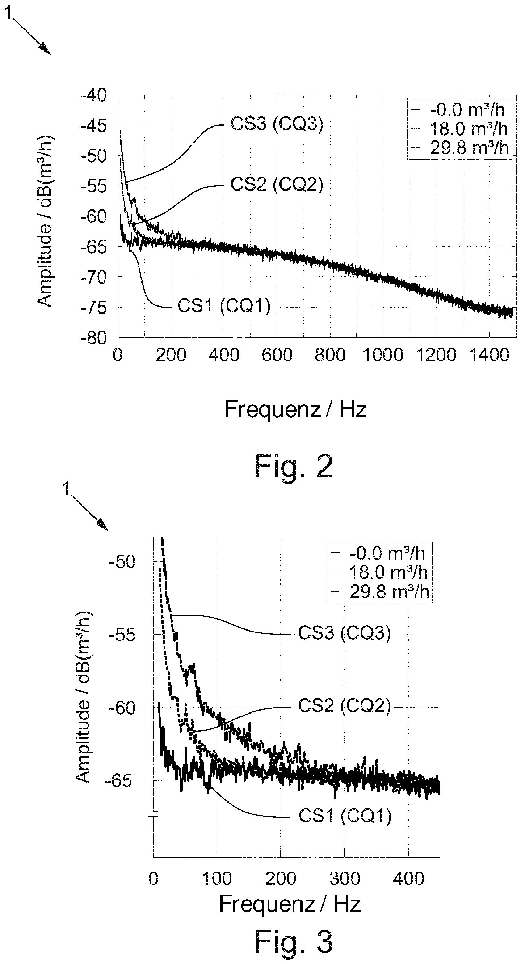

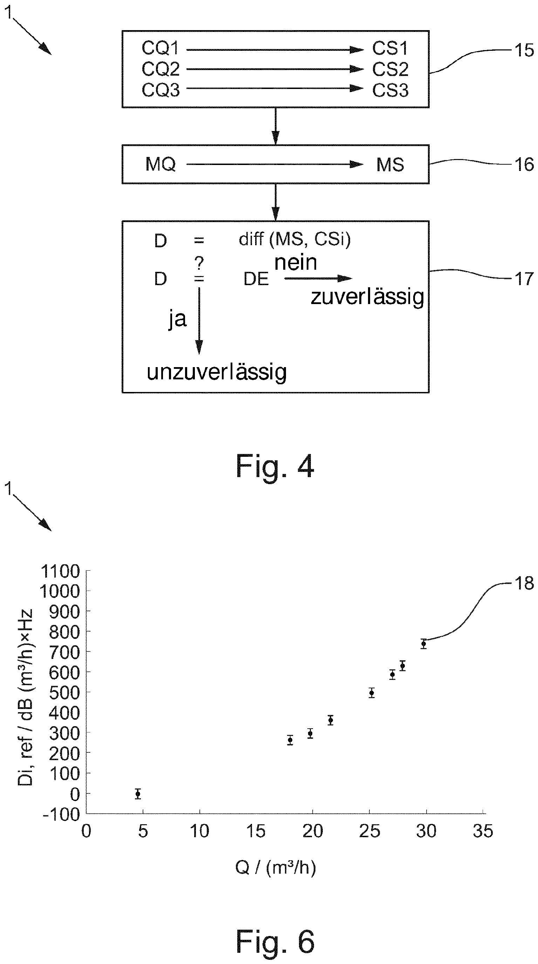

Das in den Figuren dargestellte Verfahren 1 zum Betreiben eines magnetisch-induktiven Durchflussmessgeräts 2 und demzufolge auch das in Fig. 1 dargestellte magnetisch-induktive Durchflussmessgerät 2 zeichnen sich dadurch aus (als Ablaufdiagramm dargestellt in Fig. 4), dass in einem Kalibrierschritt 15 eine Mehrzahl an entrauschten Vergleich-Durchflussmesswerten CQ1, CQ2, CQ3 bestimmt wird, nämlich aus Mittelung mehrerer aufgenommener verrauschter Rohmesssignale 9. Aus zumindest einem Teil der mehreren aufgenommenen verrauschten Rohmesssignale 9, auf denen die Berechnung der entrauschten Vergleich-Durchflussmesswerte CQ1, CQ2, CQ3 basiert, wird zu den entrauschten Vergleich-Durchflussmesswerten CQ1, CQ2, CQ3 jeweils ein Vergleich-Frequenzspektrum CS1, CS2, CS3 bestimmt. In den Fig. 2 und 3 sind die zu den Vergleich-Durchflussmesswerten CQ1, CQ2, CQ3 ermittelten Vergleich-Frequenzspektren CS1, CS2, CS3 dargestellt. Um zu verdeutlichen, dass die Vergleich-Frequenzspektren CS1, CS2, CS3 mit den aufgenommenen verrauschten Rohmessdaten 9 berechnet worden sind, die auch der Ermittlung der korrespondierenden Vergleich-Durchflussmesswerte CQ1, CQ2, CQ3 zugrunde gelegen haben, ist für die Vergleich-Frequenzspektren CS1, CS2, CS3 die symbolische Notation CS1(CQ1), CS2(CQ2), CS3(CQ3) verwendet worden.

Die hier verwendeten Buchstabenbezeichner für verschiedene Verfahrensgegenstände dienen der besseren Identifizierbarkeit der dargestellten verfahrensgegenständlichen Größen, es handelt sich im strengen Sinne nicht um Formelzeichen, sondern eher um "sprechende" Bezugszeichen. In Fig. 4 wird der Zusammenhang zwischen Vergleich-Durchflussmesswerten CQi und entsprechenden Vergleich-Frequenzspektren CSi durch Zuordnungspfeile im Kalibrierschritt 15 verdeutlicht. Wichtig ist, dass die zu den entrauschten Vergleich-Durchflussmesswerten CQ1, CQ2, CQ3 jeweils berechneten Vergleich-Frequenzspektren CS 1, CS2, CS3 charakteristisch sind für die Vergleich-Durchflussmesswerten CQ1, CQ2, CQ3; auf dieser Erkenntnis beruht das Verfahren zur Bestimmung der Zuverlässigkeit bzw. der Plausibilität und Vertrauenswürdigkeit eines aktuellen Durchflussmesswertes.

In den Fig. 2 und 3 ist zu erkennen, dass sich die Amplituden der Vergleich-Frequenzspektren CSi gerade bei kleinen Frequenzen systematisch mit sich ändernden Durchflussmesswerten CQi ändern. Dieser Zusammenhang wird in dem erfindungsgemäßen Verfahren 1 genutzt. Die Vergleich-Durchflussmesswerte CQi sind hier so gewählt worden, dass sie möglichst den gesamten genutzten Messbereich abdecken.

Der Kalibrierschritt 15 wird üblicherweise einmal im fehlerfreien Zustand des magnetisch-induktiven Durchflussmessgeräts 2 durchgeführt, beispielsweise als Werkskalibrierung oder unmittelbar nach Einbau des magnetisch-induktiven Durchflussmessgeräts 2 im Prozess des Anwenders.

Im daran anschließenden Messbetrieb 16 wird aus mehreren aufgenommenen verrauschten Rohmesssignalen 9 ein aktueller entrauschter Durchflussmesswert MQ berechnet. Aus zumindest einem Teil der mehreren aufgenommenen verrauschten Rohmesssignale 9, auf denen die Berechnung des aktuellen entrauschten Durchflussmesswerts MQ basiert, wird ein aktuelles Mess-Frequenzspektrum MS bestimmt. Dieses Mess-Frequenzspektrum MS ist in den Figuren aus Gründen der Übersichtlichkeit nicht dargestellt; es läge als weiteres Frequenzspektrum in dem Bereich der Vergleich-Frequenzspektren CSi.

Abschließend wird in einem Vergleichschritt 17 das aktuelle Mess-Frequenzspektrum MS mit einem der Vergleich-Frequenzspektren CSi verglichen und ein Abweichungswert D bestimmt. In Fig. 4 ist die Bestimmung des Abweichungswertes D symbolisch beschrieben durch eine Funktionalität diff(MS, CSi). In Abhängigkeit von dem Abweichungswert D wird der aktuelle entrauschte Durchflussmesswert MQ als unzuverlässig signalisiert. In den Ausführungsbeispielen ist vorgesehen, dass einer Abweichung des Abweichungswertes D von einem Erwartungswert DE signalisiert wird, dass der aktuelle entrauschte Durchflussmesswert MQ als unzuverlässig (invalid) eingestuft worden ist, andernfalls ist der Durchflussmesswert MQ zuverlässig (valid).

In den dargestellten Ausführungsbeispielen ist das Verfahren 1 so realisiert, dass als Frequenzspektren CS, MS jeweils die Amplitudenspektren verwendet werden, also das Amplitudenspektrum des Vergleich-Frequenzspektrums CS und das Amplitudenspektrum des aktuellen Mess-Frequenzspektrums MS. Da die aufgenommenen verrauschten Rohmesssignale 9 schon digitalisierte Werte in einem zeitlichen Abtastsystem darstellen (A/D-Wandlung), werden die Frequenzspektren hier sämtlich durch Fast-Fourier-Analyse der aufgenommenen verrauschten Rohmesssignale 9 gewonnen. Fig. 1 ist zu entnehmen, dass die aufgenommenen verrauschten Rohmesssignale 9 über einen weiteren Signalpfad 13 einer zweiten Signalverarbeitungsvorrichtung 14 zugeführt werden, wo die Frequenzanalyse implementiert ist. Die Berechnung hätte auch stattfinden können in der Signalverarbeitungsvorrichtung 10. Hier ist der dargestellte Weg eines separaten, weiteren Signalpfades 13 verfolgt worden, um eine existente Zertifizierung des ersten Signalpfades 7 (in diesem Fall hinsichtlich des Safety-Integrity-Levels, SIL) nicht zu gefährden.

In allen Ausgestaltungen des Verfahrens 1 wird vorliegend so vorgegangen, dass im Vergleichschritt 17 als Abweichungswert D die Fläche zwischen dem aktuellen Mess-Frequenzspektrum MS und dem herangezogenen Vergleich-Frequenzspektrum CS berechnet wird. Speziell wird die im Einzelnen nicht dargestellte Flächenberechnung in einem Frequenzbereich bis 500 Hz durchgeführt. Insbesondere in Fig. 3 ist zu erkennen, dass in diesem Bereich eine besonders große Varianz der Frequenzspektren bei unterschiedlichen Durchflüssen gegeben ist, sodass Unterschiede zwischen den zu vergleichenden Frequenzspektren besonders leicht zu erkennen sind.

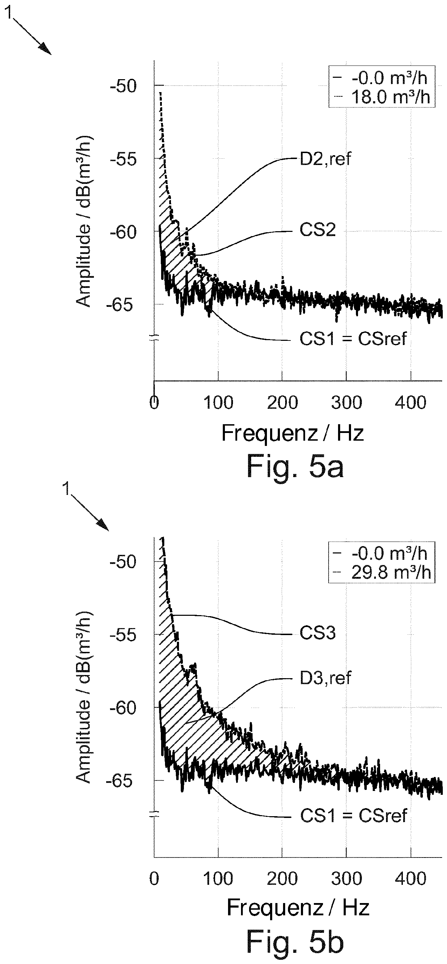

Anhand der Fig. 3 und 5 ist besonders gut ersichtlich, dass die aus den verrauschten Rohmesssignalen 9 gewonnen Frequenzspektren CS ebenfalls sehr verrauscht sind, also große Amplitudenunterschiede bei frequenzmäßig benachbarten Amplituden aufweisen. Dadurch ist auch die zuvor beschriebene Flächenberechnung zwischen zwei Frequenzspektren sehr unruhig, auch bei Frequenzspektren, die für eng beieinanderliegende Durchflüsse ermittelt worden sind. Um ein weniger schwankungsintensives Verhalten zu erzielen, werden die Frequenzspektren CS, MS geglättet, vorliegend - wenn auch nicht ausdrücklich dargestellt - durch Anwendung eines gleichgewichteten gleitenden Mittelwertes unter Verwendung von 20 benachbarten Werten des Frequenzspektrums.

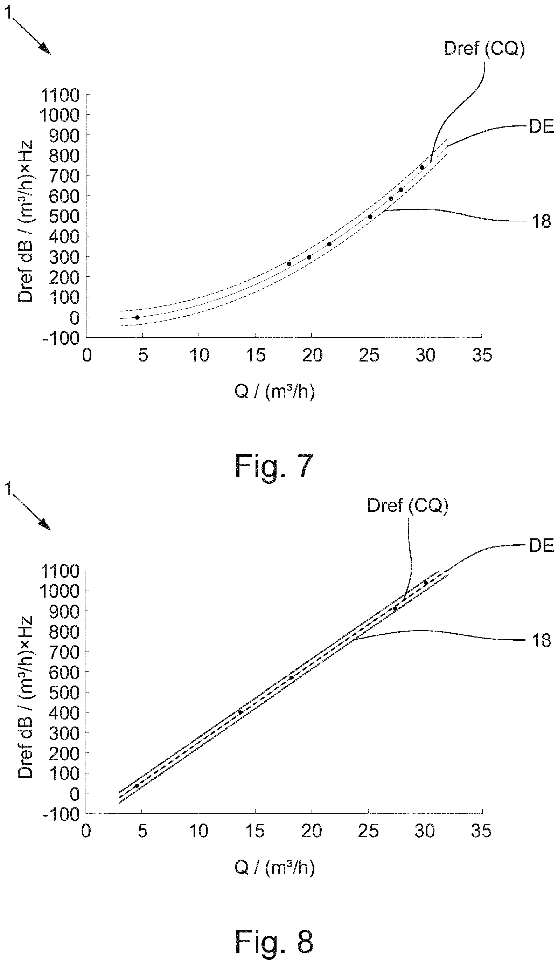

Bei den dargestellten Ausführungsbeispielen wird die zulässige Abweichung des Abweichungswertes D von dem Erwartungswert DE durch ein Toleranzband 18 um die Erwartungswerte DE bzw. einen Verlauf der Erwartungswerte DE beschrieben. Wenn der Abweichungswert D innerhalb des Toleranzbandes 18 liegt, dann gilt D=DE als erfüllt und es liegt ein vertrauenswürdiger Messwert vor (siehe Fig. 7 und 8).

Es gibt unterschiedliche Möglichkeiten, den Vergleichschritt 17 zu realisieren. Es werden nachfolgend zwei Varianten beschrieben.

Eine erste Variante des Verfahrens 1 sieht vor, dass die im Kalibrierschritt 15 berechneten entrauschten Vergleich-Durchflussmesswerte CQi und die zugehörigen Vergleich-Frequenzspektren CSi, also beispielsweise wie in den Fig. 2 und 3 dargestellt, zumindest teilweise abgespeichert werden und im Vergleichschritt 17 das Mess-Frequenzspektrum MS mit demjenigen Vergleich-Frequenzspektrum CSi verglichen und ein Abweichungswert D bestimmt wird, welches Vergleich-Frequenzspektrum CSi zu dem entrauschten Vergleich-Durchflussmesswert CQi gehört, der den geringsten Unterschied zum aktuellen entrauschten Durchflussmesswert MQ aufweist. In Fig. 3 sind verschiedene Vergleich-Frequenzspektren CSi, nämlich die Vergleich-Frequenzspektren CS1, CS2, CS3 dargestellt, zu denen die Vergleich-Durchflussmesswerte CQi, also CQ1, CQ2 und CQ3 gehören. Die konkreten Durchflusswerte dazu sind 0 m^3/h, 18 m^3/h und 29,8 m^3/h. Ein Mess-Frequenzspektrum MS ist nicht dargestellt, gleichwohl lässt sich die vorgenannte Variante anhand von Fig. 3 erläutern.

Wenn angenommen wird, dass ein aktueller entrauschter Durchflussmesswert MQ mit MQ=17 m^3/h bestimmt wird und die Messung fehlerfrei ist, dann muss das zugehörige Mess-Frequenzspektrum MS verglichen werden mit dem Vergleich-Frequenzspektrum CS2, weil der zu dem Vergleich-Frequenzspektrum CS2 gehörende Vergleich Durchflussmesswert CQ2 am nächsten an dem aktuellen entrauschten Durchflussmesswert MQ ist. Da Fehlerfreiheit unterstellt ist, wird das Mess-Frequenzspektrum MS praktisch deckungsgleich sein mit dem Vergleich-Frequenzspektrum CS2. Wird als Abweichungswert D die Differenzfläche der beiden Frequenzspektren MS und CS2 berechnet, hat diese einen Wert nahe Null. Dies ist immer so im fehlerfreien Fall, weshalb der Erwartungswert E einen Wertebereich um Null definiert. Im Fehlerfall liegen die Frequenzspektren weiter auseinander mit einer von Null mehr oder weniger deutlich verschiedenen Differenzfläche, weshalb der zu testende aktuelle entrauschte Durchflussmesswert als unzuverlässig erkannt und entsprechend als unzuverlässig signalisiert wird.

Demgegenüber zeichnet sich eine zweite Variante des Verfahrens 1 dadurch aus, dass im Kalibrierschritt 15 eines der mehreren Vergleich-Frequenzspektren CSi als Referenz-Frequenzspektrum CSref gewählt und abgespeichert wird. Für die anderen Vergleich-Frequenzspektren CSi wird jeweils ein Referenz-Abweichungswert Di,ref zu dem Referenz-Frequenzspektrum CSref , also prinzipiell wie im Vergleichschritt 17, bestimmt. Im Vergleichschritt 17 wird das aktuelle Mess-Frequenzspektrum MS mit dem Referenz-Frequenzspektrum CSref verglichen und der Abweichungswert D wird bestimmt. Als Erwartungswert DE wird ein geeigneter Referenz-Abweichungswert Di,ref oder ein von den Referenz-Abweichungswerten Di,ref abgeleiteter Wert Dref herangezogen.

Das Verfahren 1 lässt sich anhand von den Fig. 5 bis 7 erläutern, auch wenn hier wiederum kein aktuelles Mess-Frequenzspektrum MS dargestellt ist. Die Frequenzspektren in den Fig. 5a und 5b entsprechen den Frequenzspektren in den Fig. 2 und 3. Das Vergleich-Frequenzspektrum CS1 wird zum Referenz-Frequenzspektrum CSref gewählt und gespeichert. Zu jedem anderen Vergleich-Frequenzspektrum, also zu den Vergleich-Frequenzspektren CS2 und CS3 werden die Referenz-Abweichungswerte D2,ref und D3,ref ermittelt (gestrichelte Differenzflächen in den Fig. 5a und 5b). In der Notation von Fig. 4 müsste es bezüglich des Vergleichschritts 17 also heißen: D2,ref=diff(CS2, CSref) und D3,ref=diff(CS3, CSref). Nur diese Werte müssen gespeichert werden, nicht die Vergleich-Frequenzspektren CS2 und CS3. Liegt nun ein aktueller entrauschter Durchflussmesswert MQ mit seinem aktuellen Mess-Frequenzspektrum MS vor, wird das Mess-Frequenzspektrum MS mit dem Referenz-Frequenzspektrum CSref verglichen und ein entsprechender Abweichungswert D erhalten, also: D=diff(MS,CSref).

Wenn wieder unterstellt wird, dass der aktuelle entrauschte Durchflussmesswert MQ mit MQ=17 m^3/h bestimmt worden ist und die Messung fehlerfrei ist, dann ist der geeignete Referenz-Abweichungswert Di,ref als Erwartungswert DE der Referenz-Abweichungswert D2,ref, weil er aus der Mehrzahl an Referenz-Abweichungswerten Di,ref derjenige Referenz-Abweichungswert ist, dessen zugehöriger Vergleich-Durchflussmesswert CQ2 am nächsten gelegen ist zu dem aktuellen Mess-Durchflussmesswert MQ. Bei angenommener Fehlerfreiheit bei der Bestimmung des aktuellen entrauschten Durchflussmesswerts MQ gilt dann praktisch D=D2,ref, D liegt also nahe bei D2,ref, insbesondere in einem Toleranzbereich 18 um D2,ref.

Das gemachte Beispiel funktioniert deshalb gut, weil absichtlich ein aktueller entrauschter Durchflussmesswert MQ angenommen worden ist, der sehr nahe an einem verfügbaren Vergleich-Durchflussmesswert liegt, nämlich CQ2. Um eine gute Abdeckung über den Messbereich des magnetisch-induktiven Durchflussmessgeräts 2 mit dem Verfahren 1 zu erzielen, muss mit einer größeren Anzahl von Vergleich-Durchflussmesswerten CQ gearbeitet werden, was in Fig. 6 angedeutet ist. Hier sind für acht Vergleich-Durchflussmesswerte CQ bzw. für deren zugeordnete Vergleich-Frequenzspektren acht Referenz-Abweichungswerte Di,ref bestimmt worden. Toleranzbereiche 18 sind ebenfalls angegeben.

Wie anhand von Fig. 6 erkennbar ist, liegen die Referenz-Abweichungswerte Di,ref so geordnet, dass es sich anbietet, aus den resultierenden Wertepaaren (Di,ref, CQi) aus dem Abweichungswert Di,ref eines Vergleich-Frequenzspektrums CSi mit dem Referenz-Frequenzspektrum CSref und dem zu dem Vergleich-Frequenzspektrum CSi gehörenden Vergleich-Durchflussmesswert CQi einen funktionalen Zusammenhang Dref(CQ) zwischen dem Referenz-Abweichungswert Dref und dem Vergleich-Durchflussmesswert CQ abzuleiten. Insbesondere beruht der funktionale Zusammenhang auf einer Approximationsfunktion auf Grundlage der resultierenden Wertepaare (Di,ref, CQi) aus dem Abweichungswert Di,ref eines Vergleich-Frequenzspektrums CSi mit dem Referenz-Frequenzspektrum CSref und dem zu dem Vergleich-Frequenzspektrum CSi gehörenden Vergleich-Durchflussmesswert CQi, wobei in Fig. 7 eine quadratische Ausgleichsfunktion berechnet worden ist.

Interessanterweise ist der Zusammenhang Dref(CQ) deutlich abhängig von der Geometrie des Messrohres 3. Während das Messrohr 3 in Fig. 7 eine runde Durchmesserreduzierung (zur Erhöhung der Fließgeschwindigkeit im Messquerschnitt) aufweist, hat das Messrohr 3 in Fig. 8 eine rechteckige Durchmesserreduzierung. Im ersten Fall lässt sich der Zusammenhang Dref(CQ) sehr gut mittels einer quadratischen Ausgleichsfunktion nachbilden, im zweiten Fall ist sogar eine lineare Ausgleichsfunktion ausreichend.

### Bezugszeichen

- 1: Verfahren zum Betreiben eines magnetisch-induktiven Durchflussmessgeräts
- 2: magnetisch-induktives Durchflussmessgerät
- 3: Messrohr
- 4: Magnetfelderzeugungsvorrichtung
- 5: Elektrodenpaar
- 6: verrauschtes Rohmesssignal
- 7: Signalpfad
- 8: Signalaufnahmevorrichtung
- 9: aufgenommenes verrauschtes Rohmesssignal
- 10: Signalverarbeitungsvorrichtung
- 11: entrauschter Durchflussmesswert
- 12: Nutzsignalschnittstelle
- 13: weiterer Signalpfad
- 14: zweite Signalverarbeitungsvorrichtung
- 15: Kalibrierschritt
- 16: Messbetrieb
- 17: Vergleichschritt
- 18: Toleranzband um die Erwartungswerte bzw. Dref(CQ)

- CQ, CQi: entrauschte Vergleich-Durchflussmesswerte
- CS, CSi: Vergleich-Frequenzspektren
- DE: Erwartungswert für den Abweichungswert
- CSref: Referenz-Frequenzspektrum
- MQ: aktueller entrauschter Durchflussmesswert
- MS: Mess-Frequenzspektrum
- D, Di: Abweichungswert
- Dref; Di,ref: Referenz-Abweichungswert
- Dref(CQ): funktionaler Zusammenhang

## Patentansprüche

1. Verfahren (1) zum Betreiben eines magnetisch-induktiven Durchflussmessgeräts (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes, mit einem Elektrodenpaar (5) zum Abgreifen einer in dem Medium im Messrohr (3) induzierten elektrischen Spannung als verrauschtes Rohmesssignal (6), wobei das verrauschte Rohmesssignal (6) als aufgenommenes verrauschtes Rohmesssignal (9) an eine Signalverarbeitungsvorrichtung (10) weitergeleitet wird und von der Signalverarbeitungsvorrichtung (10) eine Mehrzahl an aufgenommenen verrauschten Rohmesssignalen (9) zumindest zu einem entrauschten Durchflussmesswert (11) verarbeitet wird, wobei in einem Kalibrierschritt (15) eine Mehrzahl an entrauschten Vergleich-Durchflussmesswerten (CQ1, CQ2, CQ3) bestimmt wird, dass aus zumindest einem Teil der mehreren aufgenommenen verrauschten Rohmesssignale (9), auf denen die Berechnung der entrauschten Vergleich-Durchflussmesswerte (CQ1, CQ2, CQ3) basiert, zu den entrauschten Vergleich-Durchflussmesswerten (CQ1, CQ2, CQ3) jeweils ein Vergleich-Frequenzspektrum (CS1, CS2, CS3) bestimmt wird, wobei im Messbetrieb (16) aus mehreren aufgenommenen verrauschten Rohmesssignalen (9) ein aktueller entrauschter Durchflussmesswert (MQ) berechnet wird, dass aus zumindest einem Teil der mehreren aufgenommenen verrauschten Rohmesssignale (9), auf denen die Berechnung des aktuellen entrauschten Durchflussmesswerts (MQ) basiert, ein aktuelles Mess-Frequenzspektrum (MS) bestimmt wird,
**dadurch gekennzeichnet,**
**dass** in einem Vergleichschritt (17) das aktuelle Mess-Frequenzspektrum (MS) mit einem der Vergleich-Frequenzspektren (CSi) verglichen wird und ein Abweichungswert (D) bestimmt wird, wobei der Abweichungswert (D) als die Fläche zwischen dem aktuellen Mess-Frequenzspektrum (MS) und dem herangezogenen Vergleich-Frequenzspektrum (CS) berechnet wird, und in Abhängigkeit von dem Abweichungswert (D) der aktuelle entrauschte Durchflussmesswert (MQ) als unzuverlässig und/oder als zuverlässig signalisiert wird.

2. Verfahren (1) nach Anspruch 1, **dadurch gekennzeichnet, dass** bei Abweichung des Abweichungswertes (D) von einem Erwartungswert (DE) der aktuelle entrauschte Durchflussmesswert (MQ) als unzuverlässig signalisiert wird.

3. Verfahren (1) nach Anspruch 1 oder 2, **dadurch gekennzeichnet, dass** als Frequenzspektrum (CS, MS) das Amplitudenspektrum verwendet wird, also das Amplitudenspektrum des Vergleich-Frequenzspektrums (CS) und das Amplitudenspektrum des aktuellen Mess-Frequenzspektrums (MS), insbesondere wobei die Frequenzspektren durch Fast-Fourier-Analyse der aufgenommenen verrauschten Rohmesssignale (9) gewonnen werden.

4. Verfahren (1) nach einem der Ansprüche 1 bis 3, **dadurch gekennzeichnet, dass** im Vergleichschritt (17) der Abweichungswert (D) , insbesondere in einem Frequenzbereich bis maximal 1 kHz, vorzugsweise in einem Frequenzbereich bis maximal 500 Hz, ganz bevorzugt in einem in einem Frequenzbereich bis maximal 300 Hz berechnet wird.

5. Verfahren (1) nach einem der Ansprüche 1 bis 4, **dadurch gekennzeichnet, dass** wenigstens ein Frequenzspektrum (CS, MS) geglättet wird, insbesondere durch Anwendung eines gleitenden Mittelwertes, bevorzugt durch Anwendung eines gleichgewichteten gleitenden Mittelwertes, oder insbesondere durch Anwendung eines Glättungsfilters nach Savitzky und Golay, insbesondere mit einer Polynomordnung von 2 oder 3, insbesondere mit einer Bereichsbreite zwischen 10 und 16, besonders bevorzugt mit einer Bereichsbreite zwischen 11 und 15.

6. Verfahren (1) nach Anspruch 2 oder nach einem der Ansprüche 3 bis 5, soweit rückbezogen auf Anspruch 2, **dadurch gekennzeichnet, dass** die zulässige Abweichung des Abweichungswertes (D) von dem Erwartungswert (DE) durch ein Toleranzband (18) um die Erwartungswerte (DE) bzw. einen Verlauf der Erwartungswerte (DE) beschrieben wird.

7. Verfahren (1) nach einem der Ansprüche 1 bis 6, **dadurch gekennzeichnet, dass** die im Kalibrierschritt (15) berechneten entrauschten Vergleich-Durchflussmesswerte (CQ) und die zugehörigen Vergleich-Frequenzspektren (CS) zumindest teilweise abgespeichert werden und im Vergleichschritt das Mess-Frequenzspektrum (MS) mit demjenigen Vergleich-Frequenzspektrum (CSi) verglichen und ein Abweichungswert (D) bestimmt wird, das zu dem entrauschten Vergleich-Durchflussmesswert (CQi) gehört, der den geringsten Unterschied zum aktuellen entrauschten Durchflussmesswert (MQ) aufweist, insbesondere wobei der Erwartungswert (E) einen Wertebereich um Null definiert.

8. Verfahren (1) nach einem der Ansprüche 1 bis 6, **dadurch gekennzeichnet, dass** im Kalibrierschritt (15) eines der mehreren Vergleich-Frequenzspektren (CS) als Referenz-Frequenzspektrum (CSref) gewählt und abgespeichert wird, dass für die anderen Vergleich-Frequenzspektren (CSi) ein Referenz-Abweichungswert (Di,ref; Dref) zu dem Referenz-Frequenzspektrum (CSref) wie im Vergleichschritt (17) bestimmt wird, dass im Vergleichschritt (17) das aktuelle Mess-Frequenzspektrum (MS) mit dem Referenz-Frequenzspektrum (CSref) verglichen wird und der Abweichungswert (D) bestimmt wird, insbesondere wobei als Erwartungswert (DE) ein geeigneter Referenz-Abweichungswert (Di,ref) oder ein von den Referenz-Abweichungswerten (Di,ref) abgeleiteter Wert (Dref) herangezogen wird.

9. Verfahren (1) nach Anspruch 8, **dadurch gekennzeichnet, dass** aus der Mehrzahl an Referenz-Abweichungswerten (Di,ref) derjenige als geeigneter Referenz-Abweichungswert (Di,ref) herangezogen wird, dessen zugehöriger Vergleich-Durchflussmesswert (CQi) am nächsten gelegen ist zu dem aktuellen Mess-Durchflussmesswert (MQ).

10. Verfahren (1) nach Anspruch 8, **dadurch gekennzeichnet, dass** aus den resultierenden Wertepaaren (Di,ref, CQi) aus dem Abweichungswert (Di,ref) eines Vergleich-Frequenzspektrums (CSi) mit dem Referenz-Frequenzspektrum (CSref) und dem zu dem Vergleich-Frequenzspektrum (CSi) gehörenden Vergleich-Durchflussmesswert (CQi) ein funktionaler Zusammenhang (Dref(CQ)) zwischen dem Referenz-Abweichungswert (Dref) und dem Vergleich-Durchflussmesswert (CQ) abgeleitet wird.

11. Verfahren (1) nach Anspruch 10, **dadurch gekennzeichnet, dass** der funktionale Zusammenhang auf einer Approximationsfunktion auf Grundlage der resultierenden Wertepaare (Di,ref, CQi) aus dem Abweichungswert (Di,ref) eines Vergleich-Frequenzspektrums (CSi) mit dem Referenz-Frequenzspektrum (CSref) und dem zu dem Vergleich-Frequenzspektrum (CSi) gehörenden Vergleich-Durchflussmesswert (CQi) beruht, insbesondere auf einer Interpolationsfunktion oder auf einer Ausgleichsfunktion, insbesondere auf einer linearen oder quadratischen Interpolationsfunktion oder Ausgleichsfunktion.

12. Magnetisch-induktives Durchflussmessgerät (2) mit einem Messrohr (3) zum Führen eines Mediums, mit einer Magnetfelderzeugungsvorrichtung (4) zum Erzeugen eines das Messrohr (3) senkrecht zur Strömungsrichtung des Mediums durchsetzenden Magnetfeldes, mit einem Elektrodenpaar (5) zum Abgreifen einer in dem Medium im Messrohr (3) induzierten elektrischen Spannung als verrauschtes Rohmesssignal (6), wobei das verrauschte Rohmesssignal (6) als aufgenommenes verrauschtes Rohmesssignal (9) an eine Signalverarbeitungsvorrichtung (10) weitergeleitet wird und von der Signalverarbeitungsvorrichtung (10) eine Mehrzahl an aufgenommenen verrauschten Rohmesssignalen (9) zumindest zu einem entrauschten Durchflussmesswert (11) verarbeitet wird, wobei in einem Speicher wenigstens ein Vergleich-Frequenzspektrum (CS) abgelegt ist, das aus mehreren aufgenommenen verrauschten Rohmesssignalen berechnet worden ist bei einem Vergleich-Durchflussmesswert (CQ), wobei im Messbetrieb aus mehreren aufgenommenen verrauschten Rohmesssignalen ein aktueller entrauschter Durchflussmesswert (MQ) berechnet wird, wobei aus zumindest einem Teil der mehreren aufgenommenen verrauschten Rohmesssignale, auf denen die Berechnung des aktuellen entrauschten Durchflussmesswerts (MQ) basiert, ein aktuelles Mess-Frequenzspektrum (MS) bestimmt wird,
**dadurch gekennzeichnet,**
**dass** in einem Vergleichschritt (17) das aktuelle Mess-Frequenzspektrum (MS) mit einem der Vergleich-Frequenzspektren (CSi) verglichen wird und ein Abweichungswert (D) bestimmt wird, wobei der Abweichungswert (D) als die Fläche zwischen dem aktuellen Mess-Frequenzspektrum (MS) und dem herangezogenen Vergleich-Frequenzspektrum (CS) berechnet wird, und in Abhängigkeit von dem Abweichungswert (D) der aktuelle entrauschte Durchflussmesswert (MQ) als unzuverlässig und/oder als zuverlässig signalisiert wird.

13. Magnetisch-induktives Durchflussmessgerät nach Anspruch 12, **dadurch gekennzeichnet, dass** zur Signalisierung der Unzuverlässigkeit des aktuellen entrauschten Durchflussmesswertes (MW) ein entsprechendes Flag in dem Speicher gesetzt wird, oder dass auf einer Anzeige des magnetisch-induktives Durchflussmessgeräts ein entsprechendes Signal angezeigt wird, oder dass über eine Kommunikationsschnittstelle eine entsprechende Nachricht verschickt wird.

14. Magnetisch-induktives Durchflussmessgerät nach Anspruch 12 oder 13, **dadurch gekennzeichnet, dass** die Signalverarbeitungsvorrichtung und/oder eine andere Recheneinheit so ausgestaltet ist, dass das magnetisch-induktive Durchflussmessgerät im Betrieb die Verfahrensschritte gemäß dem Kennzeichnungsteil wenigstens eines Anspruchs der Ansprüche 2 bis 10 durchführt.

## Claims

1. Method (1) for operating a magnetic-inductive flowmeter (2) with a measuring tube (3) for guiding a medium, with a magnetic field generator (4) for generating a magnetic field passing through the measuring tube (3) perpendicular to the direction of flow of the medium, with a pair of electrodes (5) for tapping an electrical voltage induced in the medium in the measuring tube (3) as a noisy raw measurement signal (6), wherein the noisy raw measurement signal (6) is passed on to a signal processing device (10) as a detected, noisy raw measurement signal (9) and a plurality of detected, noisy raw measurement signals (9) are processed at least into a noise-removed flow measurement value (11) by the signal processing device (10), wherein, in a calibration step (15), a plurality of noise-removed comparison flow measurement values (CQ1, CQ2, CQ3) is determined, that from at least a part of the plurality of detected, noisy raw measurement signals (9), on which the calculation of the noise-removed comparison flow measurement values (CQ1, CQ2, CQ3) is based, a comparison frequency spectrum (CS 1, CS2, CS3) is determined in each case for the noise-removed comparison flow measurement values (CQ1, CQ2, CQ3), wherein, during measurement operation (16), a current noise-removed flow measurement value (MQ) is calculated from a plurality of detected, noisy raw measurement signals (9), that a current measurement frequency spectrum (MS) is determined from at least some of the plurality of detected, noisy raw measurement signals (9) on which the calculation of the current noise-removed flow measurement value (MQ) is based,
**characterized in**
**that**, in a comparison step (17), the current measurement frequency spectrum (MS) is compared with one of the comparison frequency spectra (CSi) and a deviation value (D) is determined, wherein the deviation value (D) is calculated as the area between the current measurement frequency spectrum (MS) and the used comparison frequency spectrum (CS) and, depending on the deviation value (D), the current noise-removed flow measurement value (MQ) is signaled as unreliable and/or as reliable.

2. Method (1) according to claim 1, **characterized in that** if the deviation value (D) deviates from an expected value (DE), the current noise-removed flow measurement value (MQ) is signaled as unreliable.

3. Method (1) according to claim 1 or 2, **characterized in that** the amplitude spectrum is used as the frequency spectrum (CS, MS), i.e. the amplitude spectrum of the comparison frequency spectrum (CS) and the amplitude spectrum of the current measurement frequency spectrum (MS), in particular wherein the frequency spectra are obtained by fast Fourier analysis of the detected, noisy raw measurement signals (9).

4. Method (1) according to any one of claims 1 to 3, **characterized in that**, in the comparison step (17), the deviation value (D) is calculated, in particular in a frequency range up to a maximum of 1 kHz, preferably in a frequency range up to a maximum of 500 Hz, very preferably in a frequency range up to a maximum of 300 Hz.

5. Method (1) according to any one of claims 1 to 4, **characterized in that** at least one frequency spectrum (CS, MS) is smoothed, in particular by applying a moving average, preferably by applying an equally weighted moving average, or in particular by applying a smoothing filter according to Savitzky and Golay, in particular with a polynomial order of 2 or 3, in particular with a range width between 10 and 16, particularly preferably with a range width between 11 and 15.

6. Method (1) according to claim 2 or according to any one of claims 3 to 5, insofar as referring to claim 2, **characterized in that** the permissible deviation of the deviation value (D) from the expected value (DE) is described by a tolerance band (18) around the expected values (DE) or a course of the expected values (DE).

7. Method (1) according to any one of claims 1 to 6, **characterized in that** the noise-removed comparison flow measurement values (CQ) calculated in the calibration step (15) and the associated comparison frequency spectra (CS) are at least partially stored and, in the comparison step, the measurement frequency spectrum (MS) is compared with that comparison frequency spectrum (CSi) and a deviation value (D) is determined, which belongs to the noise-removed comparison flow measurement value (CQi) having the smallest difference from the current noise-removed flow measurement value (MQ), in particular where the expected value (E) defines a value range around zero.

8. Method (1) according to any one of claims 1 to 6, **characterized in that**, in the calibration step (15), one of the plurality of comparison frequency spectra (CS) is selected and stored as reference frequency spectrum (CSref), that for the other comparison frequency spectra (CSi) a reference deviation value (Di,ref; Dref) to the reference frequency spectrum (CSref) is determined as in the comparison step (17), that, in the comparison step (17), the current measurement frequency spectrum (MS) is compared with the reference frequency spectrum (CSref) and the deviation value (D) is determined, in particular wherein a suitable reference deviation value (Di,ref) or a value (Dref) derived from the reference deviation values (Di,ref) is used as the expected value (DE).

9. Method (1) according to claim 8, **characterized in that** from the plurality of reference deviation values (Di,ref), the one whose associated comparison flow measurement value (CQi) is closest to the current measurement flow measurement value (MQ) is used as a suitable reference deviation value (Di,ref).

10. Method (1) according to claim 8, **characterized in that** a functional relationship (Dref(CQ)) between the reference deviation value (Dref) and the comparison flow measurement value (CQ) is derived from the resulting pairs of values (Di,ref, CQi) from the deviation value (Di,ref) of a comparison frequency spectrum (CSi) with the reference frequency spectrum (CSref) and the comparison flow measurement value (CQi) belonging to the comparison frequency spectrum (CSi).

11. Method (1) according to claim 10, **characterized in that** the functional relationship is derived based on an approximation function based on the resulting pairs of values (Di,ref, CQi) from the deviation value (Di, ref) of a comparison frequency spectrum (CSi) with the reference frequency spectrum (CSref) and the comparison flow measurement value (CQi) belonging to the comparison frequency spectrum (CSi), in particular based on an interpolation function or on a compensation function, in particular on a linear or quadratic interpolation function or compensation function.

12. Magnetic-inductive flowmeter (2) with a measuring tube (3) for guiding a medium, with a magnetic field generator (4) for generating a magnetic field passing through the measuring tube (3) perpendicular to the direction of flow of the medium, with a pair of electrodes (5) for tapping an electrical voltage induced in the medium in the measuring tube (3) as a noisy raw measurement signal (6), wherein the noisy raw measurement signal (6) is passed on to a signal processing device (10) as a detected, noisy raw measurement signal (9) and a plurality of detected, noisy raw measurement signals (9) are processed by the signal processing device (10) at least into a noise-removed flow measurement value (11),wherein at least one comparison frequency spectrum (CS) which has been calculated from a plurality of detected, noisy raw measurement signals at a comparison flow measurement value (CQ) is stored in a memory, wherein, in the measurement mode, a current noise-removed flow measurement value (MQ) is calculated from a plurality of detected, noisy raw measurement signals, wherein a current measurement frequency spectrum (MS) is determined from at least a part of the plurality of detected, noisy raw measurement signals on which the calculation of the current noise-removed flow measurement value (MQ) is based
**characterized in**
**that**, in a comparison step (17), the current measurement frequency spectrum (MS) is compared with one of the comparison frequency spectra (CSi) and a deviation value (D) is determined, wherein the deviation value (D) is calculated as the area between the current measurement frequency spectrum (MS) and the used comparison frequency spectrum (CS) and, depending on the deviation value (D), the current noise-removed flow measurement value (MQ) is signaled as unreliable and/or as reliable.

13. Magnetic-inductive flowmeter according to claim 12, **characterized in that**, for signaling the unreliability of the current noise-removed flow measurement value (MW), a corresponding flag is set in the storage, or that a corresponding signal is displayed on a display of the magnetic-inductive flowmeter, or that a corresponding message is sent via a communication interface.

14. Magnetic-inductive flowmeter according to claim 12 or 13, **characterized in that** the signal processing device and/or another computing unit is designed such that the magnetic-inductive flowmeter carries out the method steps during operation according to the characterizing portion of at least one of claims 2 to 10.

## Revendications

1. Procédé (1) permettant de faire fonctionner un débitmètre à induction magnétique (2), comprenant un tube de mesure (3) pour transporter un milieu, un dispositif de génération de champ magnétique (4) pour générer un champ magnétique traversant le tube de mesure (3) perpendiculairement à la direction d'écoulement du milieu, une paire d'électrodes (5) pour prélever une tension électrique induite dans le milieu dans le tube de mesure (3) sous la forme d'un signal de mesure brut bruité (6), dans lequel le signal de mesure brut bruité (6) est retransmis à un dispositif de traitement de signal (10) sous la forme d'un signal de mesure brut bruité enregistré (9), et le dispositif de traitement de signal (10) traite une pluralité de signaux de mesure bruts bruités enregistrés (9) au moins en une valeur de mesure de débit débruitée (11), dans lequel une pluralité de valeurs de mesure de débit comparatives débruitées (CQ1, CQ2, CQ3) est déterminée dans une étape d'étalonnage (15), et à partir d'au moins une partie des plusieurs signaux de mesure bruts bruités enregistrés (9) sur lesquels est basé le calcul des valeurs de mesure de débit comparatives débruitées (CQ1, CQ2, CQ3), respectivement un spectre de fréquence comparatif (CS1, CS2, CS3) est déterminé pour les valeurs de mesure de débit comparatives débruitées (CQ1, CQ2, CQ3), dans lequel en fonctionnement de mesure (16) une valeur de mesure de débit débruitée actuelle (MQ) est calculée à partir de plusieurs signaux de mesure bruts bruités enregistrés (9), et un spectre de fréquence de mesure actuel (MS) est déterminé à partir d'au moins une partie des plusieurs signaux de mesure bruts bruités enregistrés (9) sur lesquels est basé le calcul de la valeur de mesure de débit débruitée actuelle (MQ),
**caractérisé en ce que** dans une étape de comparaison (17), le spectre de fréquence de mesure actuel (MS) est comparé avec l'un des spectres de fréquence comparatifs (CSi) et une valeur d'écart (D) est déterminée, dans lequel la valeur d'écart (D) est calculée sous la forme de la superficie entre le spectre de fréquence de mesure actuel (MS) et le spectre de fréquence comparatif retenu (CS), et la valeur de mesure de débit débruitée actuelle (MQ) est signalée comme non fiable et/ou comme fiable en fonction de la valeur d'écart (D).

2. Procédé (1) selon la revendication 1, **caractérisé en ce qu'**en cas d'écart de la valeur d'écart (D) par rapport à une valeur attendue (DE), la valeur de mesure de débit débruitée actuelle (MQ) est signalée comme non fiable.

3. Procédé (1) selon la revendication 1 ou 2, **caractérisé en ce que** le spectre d'amplitude, c'est-à-dire le spectre d'amplitude du spectre de fréquence comparatif (CS) et le spectre d'amplitude du spectre de fréquence de mesure actuel (MS), est utilisé comme spectre de fréquence (CS, MS), en particulier dans lequel les spectres de fréquence sont obtenus par une analyse de Fourier rapide des signaux de mesure bruts bruités enregistrés (9).

4. Procédé (1) selon l'une quelconque des revendications 1 à 3, **caractérisé en ce qu'**à l'étape de comparaison (17), la valeur d'écart (D) est calculée en particulier dans une plage de fréquence jusqu'à un maximum de 1 kHz, de préférence dans une plage de fréquence jusqu'à un maximum de 500 Hz, de manière tout particulièrement préférée dans une plage de fréquence jusqu'à un maximum de 300 Hz.

5. Procédé (1) selon l'une quelconque des revendications 1 à 4, **caractérisé en ce qu'**au moins un spectre de fréquence (CS, MS) est lissé, en particulier en appliquant une moyenne mobile, de préférence en appliquant une moyenne mobile pondérée, ou en particulier en appliquant un filtre de lissage selon Savitzky et Golay, en particulier avec un ordre polynomial de 2 ou 3, en particulier avec une largeur de plage comprise entre 10 et 16, de manière particulièrement préférée avec une largeur de plage comprise entre 11 et 15.

6. Procédé (1) selon la revendication 2 ou selon l'une quelconque des revendications 3 à 5 lorsqu'elle dépend de la revendication 2, **caractérisé en ce que** l'écart admissible de la valeur d'écart (D) par rapport à la valeur attendue (DE) est décrit par une marge de tolérance (18) autour des valeurs attendues (DE) ou une courbe des valeurs attendues (DE).

7. Procédé (1) selon l'une quelconque des revendications 1 à 6, **caractérisé en ce que** les valeurs de mesure de débit débruitées (CQ), calculées à l'étape d'étalonnage (15), et les spectres de fréquence comparatifs (CS) associés sont mémorisés au moins en partie, et à l'étape de comparaison, le spectre de fréquence de mesure (MS) est comparé avec le spectre de fréquence comparatif (CSi), et une valeur d'écart (D) est déterminée, qui est associé à la valeur de mesure de débit comparative débruitée (CQi) qui présente la plus petite différence par rapport à la valeur de mesure de débit débruitée actuelle (MQ), en particulier dans lequel la valeur attendue (E) définit une plage de valeurs autour de zéro.

8. Procédé (1) selon l'une quelconque des revendications 1 à 6, **caractérisé en ce qu'**à l'étape d'étalonnage (15), l'un des plusieurs spectres de fréquence comparatifs (CS) est sélectionné en tant que spectre de fréquence de référence (CSref) et est mémorisé, **en ce que** pour les autres spectres de fréquence comparatifs (CSi), une valeur d'écart de référence (Di,ref ; Dref) par rapport au spectre de fréquence de référence (CSref) est déterminée comme à l'étape de comparaison (17), **en ce qu'**à l'étape de comparaison (17), le spectre de fréquence de mesure actuel (MS) est comparé avec le spectre de fréquence de référence (CSref), et la valeur d'écart (D) est déterminée, en particulier dans lequel une valeur d'écart de référence adaptée (Di,ref) ou une valeur (Dref) dérivée des valeurs d'écart de référence (Di,ref) est utilisée en tant que valeur attendue (DE).

9. Procédé (1) selon la revendication 8, **caractérisé en ce que** parmi la pluralité de valeurs d'écart de référence (Di,ref) on utilise en tant que valeur d'écart de référence adaptée (Di,ref) celle dont la valeur de mesure de débit comparative (CQi) associée est la plus proche de la valeur de mesure de débit mesurée actuelle (MQ).

10. Procédé (1) selon la revendication 8, **caractérisé en ce qu'**une relation fonctionnelle (Dref(CQ)) entre la valeur d'écart de référence (Dref) et la valeur de mesure de débit comparative (CQ) est dérivée à partir des paires de valeurs résultantes (Di,ref, CQi) composées de la valeur d'écart (Di,ref) d'un spectre de fréquence comparatif (CSi) par rapport au spectre de fréquence de référence (CSref) et de la valeur de mesure de débit comparative (CQi) associée au spectre de fréquence comparatif (CSi).

11. Procédé (1) selon la revendication 10, **caractérisé en ce que** la relation fonctionnelle repose sur une fonction d'approximation sur la base des paires de valeurs résultantes (Di,ref, CQi) composées de la valeur d'écart (Di,ref) d'un spectre de fréquence comparatif (CSi) par rapport au spectre de fréquence de référence (CSref) et de la valeur de mesure de débit comparative (CQi) associée au spectre de fréquence comparatif (CSi), en particulier sur une fonction d'interpolation ou une fonction de compensation, en particulier sur une fonction d'interpolation ou fonction de compensation linéaire ou quadratique.

12. Débitmètre à induction magnétique (2), comprenant un tube de mesure (3) pour transporter un milieu, un dispositif de génération de champ magnétique (4) pour générer un champ magnétique traversant le tube de mesure (3) perpendiculairement à la direction d'écoulement du milieu, une paire d'électrodes (5) pour prélever une tension électrique induite dans le milieu dans le tube de mesure (3) sous la forme d'un signal de mesure brut bruité (6), dans lequel le signal de mesure brut bruité (6) est retransmis à un dispositif de traitement de signal (10) sous la forme d'un signal de mesure brut bruité enregistré (9), et le dispositif de traitement de signal (10) traite une pluralité de signaux de mesure bruts bruités enregistrés (9) en au moins une valeur de mesure de débit débruitée (11), dans lequel au moins un spectre de fréquence comparatif (CS) est mémorisé dans une mémoire, qui a été calculé à partir de plusieurs signaux de mesure bruts bruités enregistrés à une valeur de mesure de débit comparative (CQ), dans lequel en fonctionnement de mesure, une valeur de mesure de débit débruitée actuelle (MQ) est calculée à partir de plusieurs signaux de mesure bruts bruités enregistrés, dans lequel un spectre de fréquence de mesure actuel (MS) est déterminé à partir d'au moins une partie des plusieurs signaux de mesure bruts bruités enregistrés sur lesquels est basé le calcul de la valeur de mesure de débit débruitée actuelle (MQ),
**caractérisé en ce que** dans une étape de comparaison (17), le spectre de fréquence de mesure actuel (MS) est comparé avec l'un des spectres de fréquence comparatifs (CSi) et une valeur d'écart (D) est déterminée, dans lequel la valeur d'écart (D) est calculée sous la forme de la superficie entre le spectre de fréquence de mesure actuel (MS) et le spectre de fréquence comparatif (CS) retenu, et la valeur de mesure de débit débruitée actuelle (MQ) est signalée comme non fiable et/ou comme fiable en fonction de la valeur d'écart (D).

13. Débitmètre à induction magnétique selon la revendication 12, **caractérisé en ce que** pour signaler la non-fiabilité de la valeur de mesure de débit débruitée actuelle (MW), un drapeau correspondant est défini dans la mémoire, ou **en ce qu'**un signal correspondant est affiché sur un affichage du débitmètre à induction magnétique, ou **en ce qu'**un message correspondant est envoyé par une interface de communication.

14. Débitmètre à induction magnétique selon la revendication 12 ou 13, **caractérisé en ce que** le dispositif de traitement de signal et/ou une autre unité de calcul sont configurés de telle sorte que le débitmètre à induction magnétique exécute en cours de fonctionnement les étapes de procédé selon la partie caractérisante d'au moins une revendication des revendications 2 à 10.
